# EUROPEAN PATENT SPECIFICATION

(11) **EP 1 940 934 B1**
(45) Date of publication and mention of the grant of the patent: **02.12.2009**
(21) Application number: 05807372.7
(22) Date of filing: 26.10.2005
(51) Int. Cl.: C08K 3/34, B60C 1/00

(54) **METHOD FOR PRODUCING A CROSSLINKABLE ELASTOMERIC COMPOSITION**
VERFAHREN ZUR HERSTELLUNG EINER VERNETZBAREN ELASTOMERZUSAMMENSETZUNG
PROCÉDÉ SERVANT À PRODUIRE UNE COMPOSITION ÉLASTOMÈRE RÉTICULABLE

(43) Date of publication of application: 09.07.2008
(73) Proprietor: PIRELLI TYRE S.p.A., 20126 Milano (IT)
(72) Inventor: GALIMBERTI, Maurizio, I-20126 Milano (IT); GRASSI, Lisa, I-20126 Milano (IT); TESTI, Stefano, I-20126 Milano (IT); CAPRIO, Michela, I-20126 Milano (IT); GIANNINI, Luca, I-20126 Milano (IT)
(74) Representative: Longoni, Alessandra
(86) International application number: PCT/EP2005/011466
(87) International publication number: WO 2007/048424

(56) References cited:
- EP-A- 1 408 074
- WO-A-2004/039872
- WO-A-2004/056586
- WO-A-2005/118695
- WO-A-2006/010479
- US-A1- 2003 144 401

## Description

The present invention relates to a method for producing a crosslinkable elastomeric composition.

More particularly, the present invention relates to a method for producing a crosslinkable elastomeric composition, said elastomeric composition comprising at least one elastomeric polymer and at least one nanosized layered material.

The obtained crosslinkable elastomeric composition is primarily, but not exclusively, intended for use in the production of tires.

In the rubber industry, in particular that of tires, the use of nanosized layered material in crosslinkable elastomeric compositions has been already described. Said nanosized layered material are often used as reinforcing fillers in order to increase the mechanical properties of the crosslinkable elastomeric compositions.

For example, the use of nanosized layered material in crosslinkable elastomeric compositions has been described in the following patent applications: European Patent Application EP 1,193,085; International Patent Application WO 2004/005388; International Patent Applications US 2003/0004250 and WO 2005/049340 in the name of the Applicant.

Conventionally, the mixing of elastomeric polymers with reinforcing fillers and the other ingredients optionally present (such as, for example, lubricating aids, curatives and auxiliary substances) in order to obtain crosslinkable elastomeric compositions, is performed, for example, by means of an open mixer of open-mill type, or of an internal mixer of the type with tangential rotors (Banbury) or with interlocking rotors (Intermix).

Said mixers operate in a batchwise or discontinuous manner, i.e. a new batch of ingredients is charged in the mixer only after the complete discharge of the previuos batch.

For the aim of the present description and of the claims which follows, the expression "batchwise manner" means a production of a defined quantity (batch) of a crosslinkable elastomeric composition in a discontinuous manner, by means of an open mixer of open-mill type, or of an internal mixer, particularly an internal mixer of the type with tangential rotors (Banbury), each batch being processed starting from the feeding of the various ingredients till to the discharching of the final crosslinkable elastomeric composition.

The Applicant has noticed that the production of a crosslinkable elastomeric compositions by means of the above reported mixers may show some drawbacks when, as a reinforcing filler, a nanosized layered material is used.

In particular, the Applicant has noticed that said nanosized layered material is not free-flowing and, when added to a crosslinkable elastomeric composition may stick and form lumps with a consequent non homogeneous distribution of the same into the elastomeric polymers.

Furthermore, the Applicant has noticed that said nanosized layered material may cause fouling of the walls of the mixers, said fouling causing a loss of said nanosized layered material and a consequent not accurate dosage of the same. Moreover, because of said fouling, the mixers have to be cleaned at the end of every production campaign so causing a lengthening in the production process which negatively affect the production costs.

Moreover, said nanosized layered material, being in the form of fine dusts may diffuse into the environment causing:
- a loss of layered material and a consequent not accurate dosage of the same;
- a contamination of other materials;
- risks for the environment.

All the above reported drawbacks negatively affect the properties of the obtained crosslinkable elastomeric compositions.

In particular, the Applicant has noticed that the obtained elastomeric compositions does not show uniformity of properties (i.e. mechanical properties both static and dynamic). Said properties may vary both within the same batch and from batch to batch even within the same production campaign.

Said non-uniformity of properties cause a corresponding variation of performances in the finished product (for example, a tire).

The Applicant has now found that it is possible to obtain crosslinkable elastomeric compositions comprising at least one nanosized layered material and at least one first elastomeric polymer, capable of being advantageously used in the manufacture of crosslinked manufactured products, in particular in the manufacture of tires, by using said nanosized layered material in the form of a masterbatch, said masterbatch being obtained by previously mixing a large amount (i.e. an amount higher than or equal to 70 phr) of said nanosized layered material with at least one second elastomeric polymer. Subsequently, said masterbatch is added to said at least one first elastomeric polymer obtaining crosslinkable elastomeric compositions showing a good uniformity of properties. Because of the presence of said large amount of nanosized layered material, the obtained masterbatches may be advantageously added also to elastomeric compositions comprising elastomeric polymers differents from the elastomeric polymers present in the masterbatches without negatively affecting their properties.

According to a first aspect, the present invention thus relates to a method for producing a crosslinkable elastomeric composition comprising:
(a) at least one first elastomeric polymer;
(b) at least one layered material having an individual layer thickness of from 0.01 nm to 30 nm, preferably of from 0.05 nm to 15 nm;
(c) at least one vulcanizing agent; said method comprising the following steps:
   (i) feeding said at least one layered material (b) and at least one second elastomeric polymer (d), into at least one extruder comprising a housing, at least one screw rotatably mounted in said housing including at least one feed opening and a discharge opening, said at least one layered material being fed into said at least one extruder in an amount higher than or equal to 70 phr, preferably higher than or equal to 100 phr, more preferably of from 150 phr to 400 phr, still more preferably of from 200 phr to 300 phr;
   (ii) mixing and softening said mixture so as to obtain a masterbatch;
   (iii) discharging the obtained masterbatch through a discharge opening;
   (iv) mixing the obtained masterbatch with said at least one first elastomeric polymer (a) and said at least one vulcanizing agent (c), to obtain the crosslinkable elastomeric composition, said mixing being carried out in a batchwise manner.

According to one preferred embodiment, said at least one layered material (b) is present in the crosslinkable elastomeric composition in an amount of from 1 phr to 50 phr, preferably of from 2 phr to 40 phr, even more preferably of from 5 phr to 30 phr.

For the purposes of the present description and of the claims which follows, the term "phr" means the parts by weight of a given component of the masterbatch and/or of the elastomeric composition per 100 parts by weight of the elastomeric polymer(s).

For the purpose of the present description and of the claims which follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

According to one preferred embodiment, said at least one second elastomeric polymer (d) is different from said at least one first elastomeric polymer (a).

According to a further preferred embodiment, said masterbatch may further comprise (e) at least one silane coupling agent.

According to a further preferred embodiment, said masterbatch may further comprise (f) discontinuous fibres.

According to one preferred embodiment, said at least one extruder is a co-rotating twin-screw extruder.

Said masterbatch may be obtained in the form of a continuous ribbon or, alternatively, in the form of a subdivided product.

According to one preferred embodiment, said step (ii) is carried out at a temperature of from 50°C to 240°C, more preferably of from 70°C to 220°C.

According to one preferred embodiment, said step (ii) is carried out for a time of from 10 seconds to 3 minutes, more preferably of from 20 seconds to 2 minutes.

According to one preferred embodiment, said step (iv) is carried out by means of an open mixer of open-mill type, or of an internal mixer of the type with tangential rotors (Banbury) or with interlocking rotors (Intermix). An internal mixer of the type with tangential rotors (Banbury) is particularly preferred.

According to one preferred embodiment, both said at least one first elastomeric polymer (a) and said at least one second elastomeric polymer (d) may be selected from elastomeric polymers commonly used in sulfur-crosslinkable elastomeric compositions, that are particularly suitable for producing tires, that is to say from elastomeric polymers or copolymers with an unsaturated chain having a glass transition temperature (Tg) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene or isoprene are particularly preferred.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, both said at least one first elastomeric polymer (a) and said at least one second elastomeric polymer (d) may be selected, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

Alternatively, both said at least one first elastomeric polymer (a) and said at least one second elastomeric polymer (d) may be selected, for example, from elastomeric polymers of one or more monoolefins with an olefinic comonomer or derivatives thereof. The monoolefins may be selected, for example, from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and may be preferably selected, for example, from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

Elastomeric polymers functionalized by reaction with suitable terminating agents or coupling agents may also be used. In particular, the diene elastomeric polymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European patent EP 451 604, or patents US 4 742 124 and US 4 550 142).

The elastomeric polymers above disclosed may optionally include at least one functional group selected from carboxylic groups, carboxylate groups, anhydride groups, ester groups, epoxy groups, or mixtures thereof.

According to one preferred embodiment, said at least one layered material (b) may be selected, for example, from phyllosilicates such as: smectites, for example, montmorillonite, bentonite, nontronite, beidellite, volkonskoite, hectorite, saponite, sauconite; vermiculite; halloisite; sericite; aluminate oxides; hydrotalcite; or mixtures thereof. Montmorillonite is particularly preferred. These layered material generally contains exchangeable cations such as sodium (Na⁺), calcium (Ca²⁺), potassium (K⁺), or magnesium (Mg²⁺), present at the interlayer surfaces.

In order to render the layered material more compatible with the elastomeric poLymer (s) said at least one layered material (b) may be treated with at least one compatibilizing agent. Said compatibilizing agent is capable of undergoing ion exchange reactions with the cations present at the interlayers surfaces of the layerd inorganic material.

According to one preferred embodiment, said at least one compatibilizing agent may be selected, for example, from the quaternary ammonium or phosphonium salts having general formula (I): 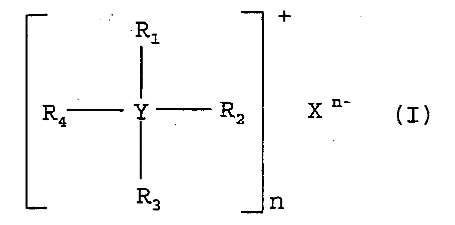 wherein:
- Y represents N or P;
- R₁, R₂, R₃ and R₄, which may be equal to or different from each other, represent a linear or branched C₁-C₂₀ alkyl or hydroxyalkyl group; a linear or branched C₁-C₂₀ alkenyl or hydroxyalkenyl group; a group -R₅-SH or -R₅-NH
wherein R₅ represents a linear or branched C₁-C₂₀ alkylene group; a C₆-C₁₈ aryl group; a C₇-C₂₀ arylalkyl or alkylaryl group; a C₅-C₁₈ cycloalkyl group, said cycloalkyl group possibly containing hetero atom such as oxygen, nitrogen or sulfur;
- Xⁿ⁻ represents an anion such as the chloride ion, the sulphate ion or the phosphate ion;
- n represents 1, 2 or 3.

The layered material (b) may be treated with the compatibilizing agent before adding it to the elastomeric polymer(s). Alternatively, the layered material (b) and the compatibilizing agent may be separately added to the elastomeric polymer(s).

The treatment of the layered material (b) with the compatibilizing agent may be carried out according to known methods such as, for example, by an ion exchange reaction between the layered material and the compatibilizer: further details are described, for example, in United States Patents US 4,136,103, US 5,747,560, or US 5,952,093.

Examples of layered material (b) which may be used according to the present invention and are available commercially are the products known by the name of Dellite^{®} 67G, Dellite^{®} 72T, Dellite^{®} 43B, from Laviosa Chimica Mineraria S.p.A.; Cloisite^{®} 25A, Cloisite^{®} 10A, Cloisite^{®} 15A, Cloisite^{®} 20A, from Southern Clays; Nanofil^{®} 5, Nanofil^{®} 8, Nanofil^{®} 9, from Süd Chemie; Bentonite^{®} AG/3 from Dal Cin S.p.A.

As disclosed above, said masterbatch may further comprise (e) at least one silane coupling agent.

According to one preferred embodiment, said at least one silane coupling agent (e) may be selected from those having at least one hydrolizable silane group which may be identified, for example, by the following general formula (II):

(R)₃Si-CₙH₂ₙ-X (II)

wherein the groups R, which may be equal or different from each other, are selected from: alkyl, alkoxy or aryloxy groups or from halogen atoms, on condition that at least one of the groups R is an alkoxy or aryloxy group; n is an integer of from 1 to 6 inclusive; X is a group selected from: nitroso, mercapto, amino, epoxide, vinyl, imide, chloro, -(S)ₘCₙH₂ₙ-Si-(R)₃, or -S-COR, in which m and n are integers of from 1 to 6 inclusive and the groups R are defined as above.

Among the silane coupling agents that are particularly preferred are bis(3-triethoxysilyl-propyl)tetrasulphide or bis(3-triethoxysilylpropyl)-disulphide. Said coupling agents may be used as such or as a suitable mixture with an inert filler (for example carbon black) so as to facilitate their incorporation into the elastomeric polymer

According to one preferred embodiment, said at least one silane coupling agent (e) is present in the masterbatch in an amount of from 0 phr to 25 phr, preferably of from 5 phr to 20 phr.

As disclosed above, said masterbatch may further comprise (f) discontinuous fibres.

According to one preferred embodiment, said discontinuous fibres (f) are aramid fibres, in particular short fibrillated poly(paraphenyleneterephthalamide) fibres (also known as aramid pulp), of the type known commercially as Kevlar^{®} pulp from Du Pont or Twaron^{®} pulp from Teijin Twaron, which are disclosed in United States Patent US 4,871,004. Preferably, the aramid fibres used according to the present invention have a configuration with a main trunk with a length (L) of from 0.2 mm to 0.5 mm, a diameter (D) of from 0.005 mm to 0.02 mm and an aspect ratio L/D of from 10 to 1000, and a plurality of fibrils or small branches which extend outwards from said trunk over the entire length of the trunk and which have a diameter that is substantially smaller than the diameter of said trunk. The surface area of said fibres is of from 4 m²/g to 20 m²/g. The surface area of the aramid fibres according to the present invention is of from 30 to 60 times greater than that of fibres having the same diameter but not comprising fibrils.

According to a preferred embodiment, the abovementioned aramid fibres may be used either as such or in the form of a predispersion in a suitable polymer matrix which serves as a vehicle, consisting of, for example, natural rubber, butadiene/styrene copolymers, ethylene/vinyl acetate copolymers, or mixtures thereof. Preferably, a blend (masterbatch) in which the abovementioned fibres are dispersed in natural rubber, which is known by the trade name Kevlar^{®} Engineered Elastomer from Du Pont and which is composed of 23% by weight of Kevlar^{®} and 77% by weight of natural rubber, is used.

It should be pointed out that although the discontinuous fibres that are preferred according to the present invention are selected from the aramid fibres described above, said discontinuous fibres may also be selected from: fibres based on other polyamides (for example Nylon), on polyesters, on polyolefins, on polyvinyl alcohol; glass fibres; or natural fibres such as, for example, cellulose or lignine; or mixtures thereof.

According to one preferred embodiment, said discontinuous fibres (f) are present in the masterbatch in an amount of from 0 phr to 100 phr, preferably of from 20 phr to 50 phr.

Alternatively, both said at least one silane coupling agent (e) and said discontinuous fibres (f) may be advantageously added to the crosslinkable elastomeric composition as such.

At least one additional reinforcing filler may advantageously be added to the crosslinkable elastomeric composition above disclosed, in an amount generally of from 0 phr to 120 phr, preferably of from 10 phr to 90 phr. The reinforcing filler may be selected from those commonly used for crosslinked manufactured products, in particular for tires, such as, for example, carbon black, silica, alumina, aluminosilicates, calcium carbonate, kaolin, or mixtures thereof.

The types of carbon black which may be used according to the present invention may be selected from those conventionally used in the production of tires, generally having a surface area of not less than 20 m²/g (determined by CTAB absorption as described in ISO standard 6810).

The silica which may be. used according to the present invention may generally be a pyrogenic silica or, preferably, a precipitated silica, with a BET surface area (measured according to ISO standard 5794/1) of from 50 m²/g to 500 m²/g, preferably from 70 m²/g to 200 m²/g.

When a reinforcing filler comprising silica is present, the crosslinkable elastomeric composition may advantageously incorporate a further silane coupling agent capable of interacting with silica and of linking it to the elastomeric polymers during the vulcanization. Examples of silane coupling agents which may be used have been already disclosed above.

As reported above, the crosslinkable elastomeric composition according to the present invention comprises at least one vulcanizing agent (c).

According to one preferred embodiment, said at least one vulcanizing agent (c) is selected from sulfur, or molecules containing sulfur (sulfur donors).

According to one preferred embodiment, said at least one vulcanizing agent (c) is present in the elastomeric composition in an amount of from 0.5 phr to 5 phr, preferably of from 1 phr to 3 phr.

Usually, said at least one vulcanizing agent (c) is used in combination with accelerators and activators known to those skilled in the art.

Activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂, or mixtures thereof.

Accelerators that are commonly used may be selected from: dithiocarbamates, guanidine, thiourea, thiazoles, sulphenamides, thiurams, amines, xanthates, or mixtures thereof.

The crosslinkable elastomeric composition above disclosed may comprise other commonly used additives selected on the basis of the specific application for which the composition is intended. For example, the following may be added to said composition: antioxidants, anti-ageing agents, plasticizers, adhesives, anti-ozone agents, modifying resins, fibres (for example Kevlar^{®} pulp), or mixtures thereof.

In particular, for the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to the elastomeric composition according to the present invention. The amount of plasticizer generally ranges from 2 phr to 100 phr, preferably from 5 phr to 50 phr.

Preferably, the mixing of the masterbatch obtained in the above reported step (iii) with said at least one first elastomeric polymer (a) is carried out as follows.

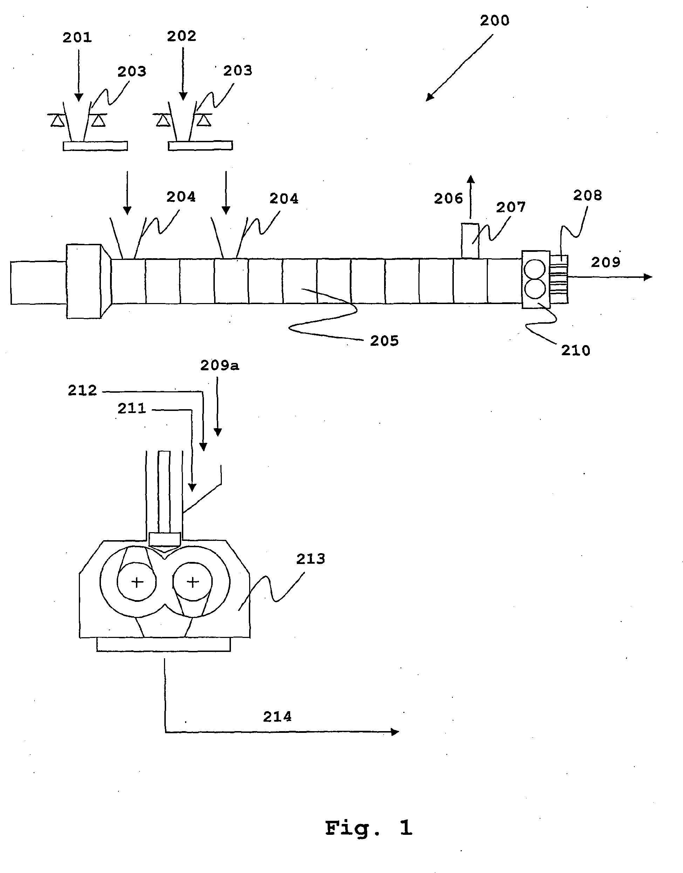

As reported above, the mixing of said at least one first elastomeric polymer (a) with the masterbatch comprising said at least one layered material (b), with said at least one vulcanizing agent (c) and with the other ingredients optionally present, is carried out in a batchwise manner, by means of an open mixer of open-mill type, or of an internal mixer of the type with tangential rotors (Banbury) or with interlocking rotors (Intermix), preferably by means of an internal mixer of the type with tangential rotors (Banbury) (see the enclosed Fig. 1)

During the mixing, the temperature is kept below a predetermined value so as to avoid premature crosslinking of the elastomeric composition. To this end, the temperature is generally kept below 170°C, preferably below 150°C, even more preferably below 130°C. As regards the mixing time, this may vary within a wide range, depending mainly on the specific ingredients of the elastomeric composition, on the presence of reinforcing fillers and on the type of mixer used. In general, a mixing time of more than 10 seconds, preferably of from 1 minute to 35 minutes is sufficient to obtain a homogeneous composition.

Preferably, the mixing is carried out in two steps. Preferably, an intermediate elastomeric composition is obtained (1^{st} step) by mixing said at least one first elastomeric polymer (a), the masterbatch comprising said at least one layered material (b), the additional reinforcing fillers and the other ingredients which are non temperature sensitive, namely, those ingredients which do not degrade and/or cause scorching at the operating conditions and/or do not interfere with the compounding process. Generally, said non temperature sensitive ingredients are all the ingredients except vulcanizing agents, accelerators, activators, retardants.

The present invention will now be illustrated in further detail by means of an illustrative embodiment, with reference to the attached Fig 1 which is a schematic diagram of a production plant for producing an elastomeric composition according to the present invention.

With reference to Fig. 1, the production plant (200) includes an extruder (205) suitable for producing a masterbatch according to the present invention. As schematically shown in Fig. 1, by means of two feed hoppers (204) the extruder (205) is fed with the ingredients necessary for producing said desired masterbatch which tipically comprises the following ingredients: at least one second elastomeric polymers (d) and at least one layered material (b), as defined above.

Preferably, the extruder (205) is a co-rotating twin screw extruder.

Generally, said ingredients may be fed to different zone of the extruder (205). For example, Fig. 1 shows two main flows corresponding to the at least one second elastomeric polymer (201) and the at least one layered material (202) in correspondence of two different zones of the extruder (205).

The same ingredient may be fed to the extruder in distinct portions, for example the same ingredient may be fed to two or more distinct zones of the extruder. For example, the layered material (202) may be fed to two distinct zones of the extruder. Therefore, each feed hopper may comprise more than one ingredient: for example, a portion of a layered material (202) may be fed to the extruder (205) through the first feed hopper (204) together with the second elastomeric polymer (201), the remaining portion of said layered material (202) being fed through the second feed hopper (204). Alternatively, the remaining portion of said layered material (202) may be fed through the first side port of the extruder (205) (not represented in Fig. 1).

Each flow (201) and (202) is fed to the feed hoppers (204) by means of a metering device (203). Preferably, said metering device (203) is a loss-in-weight gravimetric feeder.

For simplicity, Fig. 1 shows only one metering device (203) for each flow (201) and (202). However in the case each flow comprises more than one ingredient, preferably each ingredient is provided with a dedicated metering device. Alternatively, a plurality of different ingredients may be metered by means of the same metering device.

Before being fed to the metering device (203), the second elastomeric polymer (201), which is usually provided by manufacturers in bales, is comminuted in irregular particles (crumbs) of small size (about 3 mm - 15 mm as average dimensions), e.g. by of a rubber grinding (not represented in Fig. 1). The rubber crumbs may be then supplemented with an antisticking agent (e.g. chalk, silica, or other powders) to avoid reagglomeration.

The extruder (205) may optionally be provided with gravimetrically controlled feeding pumps (not represented in Fig. 1) which are useful to introduce into the extruder (205) plasticizing oils and possibly other liquid ingredients.

Fig. 1 shows also a degassing unit schematically indicated by reference sign (207) from which a flow (206) exits.

The masterbatch (209) is discharged from the extruder (205), e.g in the form of a subdivided product (209a) by pumping it through an extruder die (208), for example by means of a gear pump (210), said extruder die (208) being provided with a perforated die plate equipped with knives (not represent in Fig. 1). Alternatively, the masterbatch may be obtained in the form of a continuos ribbon which may be then granulated by means of a grinding device (not represented in Fig. 1). The obtained product in subdivided form is then cooled, e.g. by conveying it to a cooling device (not represented in Fig. 1).

The obtained product in subdivided form (209a), the at least one first elastomeric polymer (212), the at least one vulcanizing agent (211) and the other additives optionally present (not represented in Fig. 1), are then fed to an internal mixer (213) (e.g., a Banbury mixer) obtaining a crosslinkable elastomeric composition (214) according to the present invention.

The present invention will be further illustrated below by means of a number of preparation examples, which are given for purely indicative purposes and without any limitation of this invention.

### EXAMPLE 1

### Preparation of the masterbatch in a twin-screw extruder

The masterbatch was prepared as follows by using a production plant as reported in Figure 1.

The amounts of the ingredients used are given in Table 1 (the amounts of the various components are given in phr).

**TABLE 1**

| | |
|---|---|
| EXAMPLE | 1 |
| IR | 100 |
| Dellite^{®} 67G | 233 |

| | |
|---|---|
| IR: cis-1,4-polyisoprene (SKI3 - Nizhnekamskneftechim Export); Dellite^{®} 67G: organo-modified montmorillonite belonging to the smectite family (Laviosa Chimica Mineraria S.p.A.). | |

The extruder used was a co-rotating twin-screw extruder Maris TM40HT having a nominal screw diameter of 40 mm and a L/D ratio of 48.

The IR rubber was obtained in the form of granules, having an average particle size of about 3 mm - 15 mm, by means of a rubber grinder.

In order to prevent reagglomeration, the obtained granules were dusted with silica.

The obtained granules and a portion of the organo-modified montmorillonite (30% by weight with respect to the total weight of the masterbatch) were fed through a first feed hopper, while the remaining portion of the organo-modified montmorillonite (70% by weight with respect to the total weight of the masterbatch) was fed through the first side port of the extruder (not represented in Fig. 1).

The feeding was carried out by means of loss-in-weight gravimetric feeders.

The maximum temperature of the extruder was 180°C. The extrusion head was kept at a temperature of 80°C.

The obtained masterbatch was discharged from the extruder in the form of a continuous ribbon and was granulated by means of a grinding device (not represented in Fig. 1). The obtained product in a subdivided form was subsequently cooled to room temperature by means of a cooling device (not represented in Fig. 1).

## Claims

1. Method for producing a crosslinkable elastomeric composition comprising:
(a) at least one first elastomeric polymer;
(b) at least one layered material having an individual layer thickness of from 0.01 nm to 30 nm;
(c) at least one vulcanizing agent;
said method comprising the following steps:
(i) feeding said at least one layered material (b) and at least one second elastomeric polymer (d), into at least one extruder comprising a housing, at least one screw rotatably mounted in said housing including at least one feed opening and a discharge opening, said at least one layered material being fed into said at least one extruder in an amount higher than or equal to 70 phr;
(ii) mixing and softening said mixture so as to obtain a masterbatch;
(iii) discharging the obtained masterbatch through a discharge opening;
(iv) mixing the obtained masterbatch with said at least one first elastomeric polymer (a) and said at least one vulcanizing agent (c), to obtain the crosslinkable elastomeric composition, said mixing being carried out in a batchwise manner.

2. Method for producing a crosslinkable elastomeric composition according to claim 1, wherein said layered material (b), has an individual layer thickness of from 0.05 nm to 15 nm.

3. Method for producing a crosslinkable elastomeric composition according to claim 1 or 2, wherein said at least one layered material (b) is fed into said at least one extruder in an amount higher than or equal to 100 phr.

4. Method for producing a crosslinkable elastomeric composition according to claim 3, wherein said at least one layered material (b) is fed into said at least one extruder in an amount of from 150 phr to 400 phr.

5. Method for producing a crosslinkable elastomeric composition according to claim 4, wherein said at least one layered material (b) is fed into said at least one extruder in an amount of from 200 phr to 300 phr.

6. Method for producing a crosslinkable elastomeric composition according to any one of the preceding claims, wherein said at least one layered material (b) is present in the crosslinkable elastomeric composition in an amount of from 1 phr to 50 phr.

7. Method for producing a crosslinkable elastomeric composition according to claim 6, wherein said at least one layered material (b) is present in the crosslinkable elastomeric composition in an amount of from 2 phr to 40 phr.

8. Method for producing a crosslinkable elastomeric composition according to claim 7, wherein said at least one layered material (b) is present in the crosslinkable elastomeric composition in an amount of from 5 phr to 40 phr.

9. Method for producing a crosslinkable elastomeric composition according to any one of the preceding claims, wherein said at least one second elastomeric polymer is different from said at least one first elastomeric polymer.

10. Method for producing a crosslinkable elastomeric composition according to any one of the preceding claims, wherein said at least one extruder is a co-rotating twin-screw extruder.

11. Method for producing a crosslinkable elastomeric composition according to any one of the preceding claims, wherein said masterbatch is obtained in the form of a continuous ribbon or in the form of a subdivided product.

12. Method for producing a crosslinkable elastomeric composition according to any one of the preceding claims, wherein said step (ii) is carried out at a temperature of from 50°C to 240°C.

13. Method for producing a crosslinkable elastomeric composition according to claim 12, wherein said step (ii) is carried out at a temperature of from 70°C to 220°C.

14. Method for producing a crosslinkable elastomeric composition according to any one of the preceding claims, wherein said step (ii) is carried out for a time of from 10 seconds to 3 minutes.

15. Method for producing a crosslinkable elastomeric composition according to claim 14, wherein said step (ii) is carried out for a time of from 20 seconds to 2 minutes.

16. Method for producing a crosslinkable elastomeric composition according to any one of the preceding claims, wherein said step (iv), is carried out by means of an open mixer of open-mill type, or of an internal mixer of the type with tangential rotors (Banbury) or with interlocking rotors (Intermix).

17. Method for producing a crosslinkable elastomeric composition according to claim 16, wherein said step (iv) is carried out by means of an internal mixer of the type with tangential rotors (Banbury).

18. Method for producing a crosslinkable elastomeric composition according to any one of the preceding claims, wherein said at least one first elastomeric polymer (a) is selected from elastomeric polymers having a glass transition temperature (Tg) below 20°C.

19. Method for producing a crosslinkable elastomeric composition according to claim 18, wherein said at least one first elastomeric polymer (a) is selected from: cis-1,4-polyisoprene, 3,4-polyisoprene, polybutadiene, optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

20. Method for producing a crosslinkable elastomeric composition according to any one of claims 1 to 17, wherein said at least one first elastomeric polymer (a) is selected from elastomeric polymers of one or more monoolefins with an olefinic comonomer or derivatives thereof.

21. Method for producing a crosslinkable elastomeric composition according to claim 20, wherein said at least one first elastomeric polymer (a) is selected from: ethylene/propylene copolymers (EPR) or ethylene/propylene/diene copolymers (EPDM); polyisobutene; butyl rubbers; halobutyl rubbers; or mixtures thereof.

22. Method for producing a crosslinkable elastomeric composition according to any one of the preceding claims, wherein said at least one second elastomeric polymer (d) is selected from elastomeric polymers having a glass transition temperature (T_{g}) below 20°C.

23. Method for producing a crosslinkable elastomeric composition according to claim 22, wherein said at least one second elastomeric polymer (d) is selected from: cis-1,4-polyisoprene, 3,4-polyisoprene, polybutadiene, optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

24. Method for producing a crosslinkable elastomeric composition according to any one of claims 1 to 17, wherein said at least one second elastomeric polymer (d) is selected from elastomeric polymers of one or more monoolefins with an olefinic comonomer or derivatives thereof.

25. Method for producing a crosslinkable elastomeric composition according to claim 24, wherein said at least one second elastomeric polymer (d) is selected from: ethylene/propylene copolymers (EPR) or ethylene/propylene/diene copolymers (EPDM); polyisobutene; butyl rubbers; halobutyl rubbers; or mixtures thereof.

26. Method for producing a crosslinkable elastomeric composition according to any one of the preceding claims, wherein said at least one layered material (b) is selected from phyllosilicates such as: smectites, for example, montmorillonite, bentonite, nontronite, beidellite, volkonskoite, hectorite, saponite, sauconite; vermiculite; halloisite; sericite; aluminate oxides; hydrotalcite; or mixtures thereof.

27. Method for producing a crosslinkable elastomeric composition according to claim 26, wherein said at least one layered material (b) is montmorillonite.

28. Method for producing a crosslinkable elastomeric composition according to claim 26 or 27, wherein said at least one layered material (b) is treated with at least one compatibilizing agent.

29. Method for producing a crosslinkable elastomeric composition according to claim 28, wherein said at least one compatibilizing agent is selected from the quaternary ammonium or phosphonium salts having general formula (I): 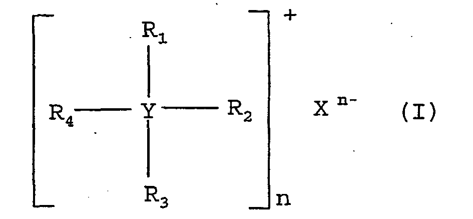 wherein:
- Y represents N or P;
- R₁, R₂, R₃ and R₄, which may be equal to or different from each other, represent a linear or branched C₁-C₂₀ alkyl or hydroxyalkyl group; a linear or branched C₁-C₂₀ alkenyl or hydroxyalkenyl group; a group -R₅-SH or -R₅-NH wherein R₅ represents a linear or branched C₁-C₂₀ alkylene group; a C₆-C₁₈ aryl group; a C₇-C₂₀ arylalkyl or alkylaryl group; a C₅-C₁₈ cycloalkyl group, said cycloalkyl group possibly containing hetero atom such as oxygen, nitrogen or sulfur;
- Xⁿ⁻ represents an anion such as the chloride ion, the sulphate ion or the phosphate ion;
- n represents 1, 2 or 3.

30. Method for producing a crosslinkable elastomeric composition according to any one of the preceding claims, wherein said masterbatch comprises (e) at least one silane coupling agent.

31. Method for producing a crosslinkable elastomeric composition according to claim 30, wherein said at least one silane coupling agent (e) is selected from those having at least one hydrolizable silane group which may be identified by the following general formula (II) :
(R)₃Si-CₙH₂ₙ-X (II)
wherein the groups R, which may be equal or different from each other, are selected from: alkyl, alkoxy or aryloxy groups or from halogen atoms, on condition that at least one of the groups R is an alkoxy or aryloxy group; n is an integer of from 1 to 6 inclusive; X is a group selected from: nitroso, mercapto, amino, epoxide, vinyl, imide, chloro, (S)ₘCₙH₂ₙ-Si-(R)₃ or -S-COR in which m and n are integers of from 1 to 6 inclusive and the groups R are defined as above.

32. Method for producing a crosslinkable elastomeric composition according to claim 30 or 31, wherein said at least one silane coupling agent (e) is present in the masterbatch in an amount of from 0 phr to 25 phr.

33. Method for producing a crosslinkable elastomeric composition according to claim 32, wherein said at least one silane coupling agent (e) is present in the masterbatch in an amount of from 5 phr to 20 phr.

34. Method for producing a crosslinkable elastomeric composition according to any one of the preceding claims, wherein said masterbatch comprises discontinuous fibres (f).

35. Method for producing a crosslinkable elastomeric composition according to claim 34, wherein said discontinuous fibres (f) are aramid fibres.

36. Method for producing a crosslinkable elastomeric composition according to claim 35, wherein said aramid fibres are short fibrillated poly(paraphenyleneterephthalamide) fibres.

37. Method for producing a crosslinkable elastomeric composition according to claim 35 or 36, wherein said aramid fibres are predispersed in a polymer matrix selected from: natural rubber, butadiene/styrene copolymers, ethylene/vinyl acetate copolymers.

38. Method for producing a crosslinkable elastomeric composition according to claim 37, wherein said polymer matrix is natural rubber.

39. Method for producing a crosslinkable elastomeric composition according to claim 34, wherein said discontinuous fibres (f) are selected from: fibres based on other polyamides, on polyesters, on polyolefins, on polyvinyl alcohol; glass fibres; natural fibres such as cellulose, lignine; or mixtures thereof.

40. Method for producing a crosslinkable elastomeric composition according to any one of claims 34 to 39, wherein said discontinuous fibres (f) are present in the crosslinkable elastomeric composition in an amount of from 0 phr to 100 phr.

41. Method for producing a crosslinkable elastomeric composition according to claim 40, wherein said discontinuous fibres (f) are present in an amount of from 20 phr to 50 phr.

42. Method for producing a crosslinkable elastomeric composition according to any one of the preceding claims, wherein at least one additional reinforcing filler is present in said crosslinkable elastomeric composition in an amount of from 0 phr to 120 phr.

43. Method for producing a crosslinkable elastomeric composition according to claim 42, wherein said at least one additional reinforcing filler is carbon black, silica, alumina, aluminosilicates, calcium carbonate, kaolin, or mixtures thereof.

44. Method for producing a crosslinkable elastomeric composition according to any one of the preceding claims, wherein said at least one vulcanizing agent (c) is selected from sulfur, or molecules containing sulfur (sulfur donors).

45. Method for producing a crosslinkable elastomeric composition according to claim 44, wherein said at least one vulcanizing agent (c) is present in the elastomeric composition in an amount of from 0.5 phr to 5 phr.

46. Method for producing a crosslinkable elastomeric composition according to claim 45, wherein said at least one vulcanizing agent (c) is present in the elastomeric composition in an amount of from 1 phr to 3 phr.

## Patentansprüche

1. Verfahren zur Erzeugung einer vernetzbaren elastomeren Zusammensetzung, umfassend:
(a) zumindest ein erstes elastomeres Polymer;
(b) zumindest ein Schichtmaterial mit einer individuellen schichtdicke von 0,01 nm bis 30 nm;
(c) zumindest ein Vulkanisiermittel;
wobei das Verfahren die folgenden Schritte umfasst:
(i) Zuführen des zumindest einen Schichtmaterials (b) und zumindest eines zweiten elastomeren Polymers (d) in zumindest einen Extruder, umfassend ein Gehäuse, zumindest einen Schraube, die rotierbar in dem Gehäuse befestigt ist, umfassend zumindest eine Zuführöffnung und eine Entladungsöffnung, wobei das Zumindest eine Schichtmaterial in den zumindest einen Extruder in einer Menge von mehr als oder gleich 70 phr geführt wird;
(ii) Mischen und Erweichen der Mischung, unter Erhalt eines Masterbatches;
(iii) Entladung des erhaltenen Masterbatches durch eine Entladungsöffnung;
(iv) Mischen des erhaltenen Masterbatches mit dem zumindest einen ersten elastomeren Polymer (a) und dem zumindest einen Vulkanisiermittel (c), unter Erhalt der vernetzbaren elastomeren Zusammensetzung, wobei das Mischen absatzweise durchgeführt wird.

2. Verfahren zur Erzeugung einer vernetzbaren elastomeren Zusammensetzung nach Anspruch 1, worin das Schichtmaterial (b) eine individuelle Schichtdicke von 0,05 bis 15 nm hat.

3. Verfahren zur Erzeugung einer vernetzbaren elastomeren Zusammensetzung nach Anspruch 1 oder 2, worin das zumindest eine schichtmaterial (b) in den zumindest einen Extruder in einer Menge von mehr als oder gleich 100 phr zugeführt wird.

4. Verfahren zur Erzeugung einer vernetzbaren elastomeren Zusammensetzung nach Anspruch 3, worin das zumindest eine Schichtmaterial (b) in den zumindest einen Extruder in einer Menge von 150 phr bis 400 phr geführt wird.

5. Verfahren zur Erzeugung einer vernetzbaren elastomeren Zusammensetzung nach Anspruch 4, worin das zumindest eine schichtmaterial (b) in den zumindest einen Extruder in einer Menge von 200 phr bis 300 phr geführt wird.

6. Verfahren zur Erzeugung einer vernetzbaren elastomeren zusammensetzung nach einem der vorhergehenden Ansprüche, worin das zumindest eine Schichtmaterial (b) in der vernetzbaren elastomeren Zusammensetzung in einer Menge von 1 phr bis 50 phr vorhanden ist.

7. Verfahren zur Erzeugung einer vernetzbaren elastomeren Zusammensetzung nach Anspruch 6, worin das zumindest eine schichtmaterial (b) in der vernetzbaren elastomeren Zusammensetzung in einer Menge von 2 phr bis 40 phr vorhanden ist.

8. Verfahren zur Erzeugung einer vernetzbaren elastomeren Zusammensetzung nach Anspruch 7, worin das zumindest eine Schichtmaterial (b) in der vernetzbaren elastomeren Zusammensetzung in einer Menge von 5 phr bis 40 phr vorhander ist.

9. Verfahren zur Erzeugung einer vernetzbaren elastomeren Zusammensetzung nach einem der vorhergehenden Ansprüche, worin das zumindest eine zweite elastomere Polymer von dem zumindest einem ersten elastomeren Polymer verschieden ist.

10. Verfahren zur Erzeugung einer vernetzbaren elastomeren Zusammensetzung nach einem der vorhergehenden Ansprüche, worin der zumindest eine Extruder ein co-rotierender Doppelschraubenextruder ist.

11. Verfahren zur Erzeugung einer vernetzbaren elastomeren Zusammensetzung nach einem der vorhergehenden Ansprüche, worin der Masterbatch in der Form eines kontinuierlichen Bandes oder in der Form eines unterteilten Produktes erhalten wird.

12. zur Erzeugung einer vernetzbaren elastomeren Zusammensetzung nach einem der vorhergehenden Ansprüche, worin der Schritt (ii) bei einer Temperatur von 50 bis 240°C durchgeführt wird.

13. Verfahren zur Erzeugung einer vernetzbarenelastomeren Zusammensetzung nach Anspruch 12, worin der Schritt (ii) bei einer Temperatur von 70 bis 220°C durchgeführt wird.

14. Verfahren zur Erzeugung einer vernetzbaren elastomeren Zusammensetzung nach einem der vorhergehenden Ansprüche, worin der Schritt (ii) für eine Zeit von 10 Sekunden bis 3 Minuten durchgeführt wird.

15. Verfahren zur Erzeugung einer vernetzbaren elastomeren Zusammensetzung nach Anspruch 14, worin der Schritt (ii) für eine Zeit von 20 Sekunden bis 2 Minuten durchgeführt wird.

16. Verfahren zur Erzeugung einer vernetzbaren elastomeren Zusammensetzung nach einem der vorhergehende Ansprüche, worin der Schritt (iv) mit Hilfe eines offenen Mischers vom Offenmahltyp oder eines internen Mischers vom Typ mit Tangentialrotoren (Banbury) oder mit ineinander greifenden Rotoren (Intermix) durchgeführt wird.

17. Verfahren zur Erzeugung einer vernetzbaren elastomeren Zusammensetzung mach 16, worin der Schritt (iv) mit Hilfe eines internen Mischers vom Typ mit Tangentialrotoren (Banbury) durchgeführt wird.

18. Verfahren zur Erzeugung eine vernetzbaren elastomeren Zusammensetzung nach einem der vorhergehenden Ansprüche, worin das zumindest eine erste elastomere Polymer (a) aus elastomeren Polymeren mit einer Glasübergangstemperatur (Tg) unterhalb von 20°c ausgewählt wird.

19. Verfahren zur Erzeugung einer vernetzbaren Zusammensetzung nach Anspruch 18, worin das zumindest eine erste elastomere Polymer (a)ausgewählt ist aus: cis-1,4-Polyisopren, 2,4-Polyisopren, Polybutadien, wahlweise halogenierten Isopren/Isobuten-Copolymeren, 1,3-Butadien/Acrylnitril-Copolymeren, Styrol/1,3-Butadien-Copolymeren, Styrol/Isopren/1,3-Butadien-Copolymeren, Styrol/1,3-Butadien/Acrylnitril-Copolymeren oder Mischungen davon.

20. Verfahren zur Erzeugung einer vernetzbaren elastomeren zusammensetzung nach einem der Ansprüche 1bis 17, worin das zumindest eine erste elastomere Polymer (a) aus elastomeren Polymeren von einem oder mehreren Monoolefinen mit einem olefinischen Comonomer oder Derivaten davon ausgewählt wird.

21. Verfahren zur Erzeugung einer vernetzbaren elastomeren Zusammensetzung nach Ansprüch 20, worin das zumindest eine erste elastomere Polymer (a) ausgewählt wird aus: Ethylen/Propylen-Copolymeren (EPR) oder Ethylen/Propylen/Dien-Copolymeren (EPDM); Polyisobuten; davon. Halobutylkautschuken oder Mischungen davon.

22. vernetzbaren elastomeren Zusammesetzung nach einem der vorhergehenden Ansprüche, worin das zumindest eine zweite elastomere (d) aus elastomeren Polymeren mit einer Glasübergangstemperatur (T_{g}) unterhalb von 20°C ausgewählt wird.

23. Verfahren zur Erzeugung einer vernetzbaren elastomere Zusammensetzung nach Anspruch 22, worin das zumindest eine zweite elastomere Polymer (d) ausgewählt wird aus: cix-1,4-Polyisopren, 3,4-Polyisopren, Polybutadien, wahlweise halogenierten Isopren/Isobuten-Copolymeren, 1,3-Butadien/Acrylnitril-Copolymeren, Styrol/1,3-Butadien-Copolymeren, Styrol/Isopren/1,3-Butadien-Copolymeren, styrol/1,3 Butadien/Acrylnitril-Copolymeren oder Mischungen davon.

24. Vernetzbaren elastomeren Zusammensetzung nach einem der Ansprüche 1 bis 17, worin das zumindest eine zweite elastomere Polymer (d) ausgewählt wird aus elastomeren Polymeren von einem oder mehreren Monoolefinen mit einem olefinischen Comonomer oder Derivaten davon.

25. Verfahren zur Erzeugung einer vernetzbaren elastomeren Zusammensetzung nach Anspruch 24, worin das zumindest eine zweite elastomere Polymer (d) ausgewählt wird aus: Ethylen/Propylen-Copolymeren (EPR) oder Ethylen/Propylen/Dien-Copolymeren (EPDM); Polyisobuten; Butylkautschuken; Halobutylkautschuken oder Mischungen davon.

26. Verfahren zur Erzeugung einer vernetzbaren elastomeren Zusammensetzung nach einem der vorhergehenden Ansprüche, worin das zumindest eine Schichtmaterial (b) ausgewählt worin das zumindest eine schichtmaterial (b) ausgewählt wird aus Phyllosilicaten wie: Smektiten, zum Beispiel Montmorillonit, Bentonit, Nontronit, Beidellit, Volkonskoit, Hectorit, Saponit, Sauconit, Vermiculit, Halloisit, Sericit, Aluminatoxiden, Hydrotalcit oder Mischungen davon.

27. Verfahren zur Erzeugung einer vernetzbaren elastomeren Zusammensetzung nach Anspruch 26, Worin das zumindest eine Schichtmaterial (b) Montmorillonit ist.

28. elastomeren Zusammensetzung nach Anspruch 26 oder 27, worin das zumindest eine Schichtmaterial (b) mit zumidest einem Kompatibilisiermittel behandelt wird.

29. Verfahren zur Erzeugung einer vernetzbaren elastomeren Zusammenseltzung nach Anspruch 28, worin das zumindest eine Kompatibilisiermittel aus den quaternären Ammonium- oder Phosphoniumsalzen mit der allgemeinen Formel (I) ausgewählt wird: 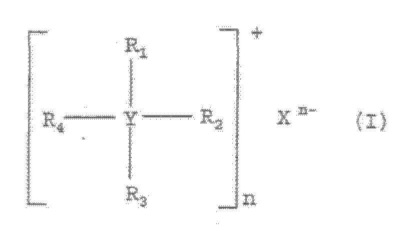 worin:
- Y N oder P ist;
- R₁ R₂, R₃ und R₄, die gleich oder verschieden voneinander sein können, eine lineare oder verzweigte C₁₋₂₀-Alkyl- oder -Hydroxyalkylgruppe, lineare oder verzweigte C₁₋₂₀-Alkenyl- oder -Hydroxyalkenylgruppe, eine Gruppe -R₄-SH oder -R₅-NH sind, worin R₅ eine lineare oder verzweigte C₁₋₂₀-Alkylengruppe, C₆₋₁₈-Arylgruppe, C₇₋₂₀-Arylalkyl- oder -Alkylarylgruppe, C₅₋₁₈-Cycloalkylgruppe ist, wobei die Cycloalkylgruppe gegebenenfalls ein Heteroatom wie Sauerstoff, Stickstoff oder Schwefel enthalten kann;
- Xⁿ⁻ ein Anion ist wie das Chloridion, Sulfation oder Phosphation;
- n 1, 2 oder 3 ist.

30. Verfahren zur Erzeugung einer vernetzbaren elastomeren Zusammensetzung nach einem der vorhergehenden Ansprüche, worin der Masterbatch (e) zumindest ein Silankupplungsmittel enthält.

31. einer vernetzbaren elastomeren Zusammensetzung nach Anspruch 30, worin das zumindest eine Silankupplungsmittel (e) ausgewählt wird aus solchen mit zumindest einer hydrolisierbaren Sillangruppe, die durch die folgende allgemeine Formel (II) identifiziert sein kann:
(R) ₃Si-CₙH₂ₙ-X (II)
worin die Gruppen R, die gleich oder verschieden voneinander sein können, ausgewählt sind aus: Alkyl-, Alkoxy- oder Aryloxygruppen oder Halogenatomen mit der Bedingung, dass zumindest eine der Gruppe R eine Alkoxy- oder Aryloxygruppe ist; n eine ganze zahl von 1 bis 6 einschließlich ist; X eine Gruppe ist ausgewählt aus: Nitroso, Mercapto, Amino, Expoxid, Vinyl, Imid, Chloro, -(S)ₘCₙH₂ₙ-Si-(R)₃ oder -S-COR, worin m und n ganze Zahlen von 1 bis 6 eingeschlossen sind und die Gruppen R wie oben definiert sind.

32. einer vernetzbaren elastomeren Zusammensetzung nach Anspruch 30 oder 31, worin das zumindest eine Silankupplungsmittel (e) in dem Masterbatch in einer Menge von 0 bis 25 phr vorhanden ist.

33. Verfahren zur Erzeugung einer vernetzbaren elastomeren Zusammenstzung nach Anspruch 32, worin das zumindest eine Silankupplungsmittel (e) im Masterbatch in einer Menge von 5 bis 20 phr vorhanden ist.

34. Verfahren zur Erzeugung einer vernetzbaren elastomeren Zusammensetzung nach einem der vorhergehenden Ansprüche, worin der Masterbatch diskontinuierliche Fasern (F) umfasst.

35. Verfahren zur Erzeugung einer vernetzbaren elastomeren Zusammensetzung nach Anspruch 34, worin die diskontinuierlichen Fasern (f) Aramidfasern sind.

36. Verfahren zur Erzeugung einer vernetzbaren elastomeren Zusammensetzung nach Anspruch 35, worin die Aramidfasern kurze fibrillierte poly(paraphenylenterephthalamid)fasern sind.

37. Verfahren zur Erzeugung einer vernetzbaren elastomeren Zusammensetzung nach Anspruch 35 oder 36, worin die Aramidfasern in einer Polymermatrix vordispergiert sind, ausgewählt aus: natürlichem Kautschuk, Butadien/Styrol-Copolymeren, Ethylen/Vinylacetat-Copolymeren.

38. Verfahren zur Erzeugung einer vernetzbaren elastomeren Zusammensetzung nach Anspruch 37, worin die Polymermatrix natürlicher Kautschuk ist.

39. Verfahren zur Erzeugung einer vernetzbaren elastomeren Zusammensetzung nach Anspruch 34, worin die diskontinuierlichen Fasern (f) ausgewählt werden aus: Fasern auf der Basis von anderen Polyamiden, Polyestern, Polyolefinen, Polyvinylalkohol; Glasfasern, natürlichen Fasern wie Cellulose, Lignin oder Mischungen davon.

40. Verfahren zur Erzeugung einer vernetzbaren elastomeren Zusammensetzung nach einem der Ansprüch 34 bis 39, worin die diskontinuierlichen Fasern (f) in der vernetzbaren elastomeren zusammensetzung in einer Menge von 0 bis 100 phr vorhanden sind.

41. Verfahren zur Erzeugung einer vernetzbaren elastomeren Zusammensetzung nach einem Anspruch 40, worin die diskontinuierlichen Fasern (f) in der vernetzbaren elastomeren zusammensetzung in einer Menge von 20 bis 50 phr vorhanden sind.

42. Verfahren zur Erzeugung einer vernetzbaren elastomeren Zusammensetzung nach einem der vorhergehenden Ansprüche, worin zumindest ein zusätzlicher verstärkungsfüllstoff in der vernetzbaren elastomeren Zusammensetzung in einer Menge von 0 bis 120 phr vorhanden ist.

43. Verfahren zur Erzeugung einer vernetzbaren elastomeren Zusammensetzung nach Anspruch 42, worin der zumindest eine zusätzliche Verstärkungsfüllstoff Ruß, Silica, Alumina, Aluminosilicate, Calciumcarbonat, Kaolin oder Mischungen davon ist.

44. Verfahren zur Erzeugung einer vernetzbaren elastomeren Zusammensetzung nach einem der vorhergehenden Ansprüche, worin das zumindest eine Vulkanisiermittel (c) ausgewählt wird aus Schwefel oder Molekülen, die Schwefel enthalten (Schwefeldonoren).

45. Verfahren zur Erzeugung einer vernetzbaren elastomeren Zusammensetzung nach Anspruch 44, worin das zumindest eine Vulkanisiermittel (c) in der elastomeren Zusammensetzung in einer Menge von 0,5 bis 5 phr vorhanden ist.

46. Verfahren zur Erzeugung einer vernetzbaren elastomeren Zusammensetzung nach Anspruch 45, worin das zumindest eine Vulkanisiermittel (c) in der elastomeren Zusammensetzung in einer Menge von 1 bis 3 phr vorhanden ist.

## Revendications

1. Procédé de production d'une composition élastomère réticulable comprenant :
a) au moins un premier polymère élastomère ;
b) au moins un matériau feuilleté, où chaque feuillet individuel est épais de 0,01 nm à 30 nm ;
c) et au moins un agent de vulcanisation ;
lequel procédé comporte les étapes suivantes :
i) introduire ledit matériau feuilleté (b) au nombre d'au moins un et au moins un deuxième polymère élastomère (d) dans au moins une extrudeuse comprenant un fourreau, au moins une vis montée de manière à pouvoir tourner dans ce fourreau, lequel fourreau est doté d'au moins un orifice d'alimentation et d'un orifice de décharge, lequel matériau feuilleté au nombre d'au moins un est introduit dans ladite extrudeuse au nombre d'au moins une en une proportion supérieure ou égale à 70 pcé (parties pour cent parties d'élastomères) ;
ii) malaxer et amollir le mélange obtenu, pour en faire un mélange-maître ;
iii) décharger le mélange-maître obtenu, par l'orifice de décharge ;
iv) et mélanger le mélange-maître obtenu avec ledit premier polymère élastomère (a) au nombre d'au moins un et ledit agent de vulcanisation (c) au nombre d'au moins un, de manière à obtenir la composition élastomère réticulable, cette opération de mélange étant effectuée en mode discontinu.

2. Procédé de production d'une composition élastomère réticulable, conforme à la revendication 1, dans lequel, dans ledit matériau feuilleté (b), chaque feuillet individuel est épais de 0,05 nm à 15 nm.

3. Procédé de production d'une composition élastomère réticulable, conforme à la revendication 1 ou 2, dans lequel ledit matériau feuilleté (b) au nombre d'au moins un est introduit dans ladite extrudeuse au nombre d'au moins une en une proportion supérieure ou égale à 100 pcé.

4. Procédé de production d'une composition élastomère réticulable, conforme à la revendication 3, dans lequel ledit matériau feuilleté (b) au nombre d'au moins un est introduit dans ladite extrudeuse au nombre d'au moins une en une proportion de 150 à 400 pcé.

5. Procédé de production d'une composition élastomère réticulable, conforme à la revendication 4, dans lequel ledit matériau feuilleté (b) au nombre d'au moins un est introduit dans ladite extrudeuse au nombre d'au moins une en une proportion de 200 à 300 pcé.

6. Procédé de production d'une composition élastomère réticulable, conforme à l'une des revendications précédentes, dans lequel ledit matériau feuilleté (b) au nombre d'au moins un se trouve dans la composition élastomère réticulable en une proportion de 1 à 50 pcé.

7. Procédé de production d'une composition élastomère réticulable, conforme à la revendication 6, dans lequel ledit matériau feuilleté (b) au nombre d'au moins un se trouve dans la composition élastomère réticulable en une proportion de 2 à 40 pcé.

8. Procédé de production d'une composition élastomère réticulable, conforme à la revendication 7, dans lequel ledit matériau feuilleté (b) au nombre d'au moins un se trouve dans la composition élastomère réticulable en une proportion de 5 à 40 pcé.

9. Procédé de production d'une composition élastomère réticulable, conforme à l'une des revendications précédentes, dans lequel ledit deuxième polymère élastomère au nombre d'au moins un est différent dudit premier polymère élastomère au nombre d'au moins un.

10. Procédé de production d'une composition élastomère réticulable, conforme à l'une des revendications précédentes, dans lequel ladite extrudeuse au nombre d'au moins une est une extrudeuse à deux vis co-rotatives.

11. Procédé de production d'une composition élastomère réticulable, conforme à l'une des revendications précédentes, dans lequel ledit mélange-maître est obtenu sous forme de ruban continu ou sous forme de produit divisé.

12. Procédé de production d'une composition élastomère réticulable, conforme à l'une des revendications précédentes, dans lequel ladite étape (ii) est effectuée à une température de 50 à 240 °C.

13. Procédé de production d'une composition élastomère réticulable, conforme à la revendication 12, dans lequel ladite étape (ii) est effectuée à une température de 70 à 220 °C.

14. Procédé de production d'une composition élastomère réticulable, conforme à l'une des revendications précédentes, dans lequel ladite étape (ii) dure de 10 secondes à 3 minutes.

15. Procédé de production d'une composition élastomère réticulable, conforme à la revendication 14, dans lequel ladite étape (ii) dure de 20 secondes à 2 minutes.

16. Procédé de production d'une composition élastomère réticulable, conforme à l'une des revendications précédentes, dans lequel ladite étape (iv) est effectuée au moyen d'un mélangeur ouvert de type broyeur à cuve ouverte, ou au moyne d'un mélangeur interne du type à rotors tangentiels (Banbury) ou à rotors engrenants (Intermix).

17. Procédé de production d'une composition élastomère réticulable, conforme à la revendication 16, dans lequel ladite étape (iv) est effectuée au moyen d'un mélangeur interne du type à rotors tangentiels (Banbury).

18. Procédé de production d'une composition élastomère réticulable, conforme à l'une des revendications précédentes, dans lequel ledit premier polymère élastomère (a) au nombre d'au moins un est choisi parmi les polymères élastomères dont la température de transition vitreuse Tg est inférieure à 20 °C.

19. Procédé de production d'une composition élastomère réticulable, conforme à la revendication 18, dans lequel ledit premier polymère élastomère (a) au nombre d'au moins un est choisi parmi les suivants :
cis-1,4-polyisoprène, 3,4-polyisoprène, polybutadiène, copolymères d'isoprène et d'isobutène, éventuellement halogénés, copolymères de buta-1,3-diène et d'acrylonitrile, copolymères de styrène et de buta-1,3-diène, copolymères de styrène, d'isoprène et de buta-1,3-diène, copolymères de styrène, de buta-1,3-diène et d'acrylonitrile, et mélanges de ces polymères.

20. Procédé de production d'une composition élastomère réticulable, conforme à l'une des revendications 1 à 17, dans lequel ledit premier polymère élastomère (a) au nombre d'au moins un est choisi parmi les polymères élastomères d'une ou plusieurs mono-oléfine(s) et d'un comonomère oléfinique et les dérivés de tels polymères.

21. Procédé de production d'une composition élastomère réticulable, conforme à la revendication 20, dans lequel ledit premier polymère élastomère (a) au nombre d'au moins un est choisi parmi les suivants :
copolymères d'éthylène et de propylène (EPR), copolymères d'éthylène, de propylène et de diène (EPDM), polyisobutène, caoutchoucs butyl, caoutchoucs butyl halogénés, et mélanges de ces polymères.

22. Procédé de production d'une composition élastomère réticulable, conforme à l'une des revendications précédentes, dans lequel ledit deuxième polymère élastomère (d) au nombre d'au moins un est choisi parmi les polymères élastomères dont la température de transition vitreuse Tg est inférieure à 20 °C.

23. Procédé de production d'une composition élastomère réticulable, conforme à la revendication 22, dans lequel ledit deuxième polymère élastomère (d) au nombre d'au moins un est choisi parmi les suivants :
cis-1,4-polyisoprène, 3,4-polyisoprène, polybutadiène, copolymères d'isoprène et d'isobutène, éventuellement halogénés, copolymères de buta-1,3-diène et d'acrylonitrile, copolymères de styrène et de buta-1,3-diène, copolymères de styrène, d'isoprène et de buta-1,3-diène, copolymères de styrène, de buta-1,3-diène et d'acrylonitrile, et mélanges de ces polymères.

24. Procédé de production d'une composition élastomère réticulable, conforme à l'une des revendications 1 à 17, dans lequel ledit deuxième polymère élastomère (d) au nombre d'au moins un est choisi parmi les polymères élastomères d'une ou plusieurs mono-oléfine(s) et d'un comonomère oléfinique et les dérivés de tels polymères.

25. Procédé de production d'une composition élastomère réticulable, conforme à la revendication 24, dans lequel ledit deuxième polymère élastomère (d) au nombre d'au moins un est choisi parmi les suivants :
copolymères d'éthylène et de propylène (EPR), copolymères d'éthylène, de propylène et de diène (EPDM), polyisobutène, caoutchoucs butyl, caoutchoucs butyl halogénés, et mélanges de ces polymères.

26. Procédé de production d'une composition élastomère réticulable, conforme à l'une des revendications précédentes, dans lequel ledit matériau feuilleté (b) au nombre d'au moins un est choisi parmi les phyllosilicates, tels que les smectites comme les montmorillonite, bentonite, nontronite, beidellite, volkonskoïte, hectorite, saponite et sauconite, la vermiculite, l'halloysite, la séricite, les oxydes de type aluminate, et l'hydrotalcite, ainsi que leurs mélanges.

27. Procédé de production d'une composition élastomère réticulable, conforme à la revendication 26, dans lequel ledit matériau feuilleté (b) au nombre d'au moins un est de la montmorillonite.

28. Procédé de production d'une composition élastomère réticulable, conforme à la revendication 26 ou 27, dans lequel ledit matériau feuilleté (b) au nombre d'au moins un est traité avec au moins un agent de compatibilisation.

29. Procédé de production d'une composition élastomère réticulable, conforme à la revendication 28, pour lequel ledit agent de compatibilisation au nombre d'au moins un a été choisi parmi les sels d'ammonium quaternaire ou de phosphonium quaternaire de formule générale (I) : 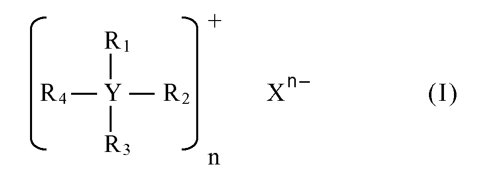 dans laquelle :
- Y représente un atome d'azote ou de phosphore ;
- R₁, R₂, R₃ et R₄ représentent des entités qui peuvent être identiques
ou différentes les unes des autres et qui sont chacune :
un groupe alkyle ou hydroxyalkyle en C₁₋₂₀, à chaîne linéaire ou ramifiée,
un groupe alcényle ou hydroxyalcényle en C₁₋₂₀, à chaîne linéaire ou ramifiée,
un groupe de formule -R₅-SH ou -R₅-NH₂ où R₅ représente un groupe alcanediyle en C₁₋₂₀, à chaîne linéaire ou ramifiée,
un groupe aryle en C₆₋₁₈,
un groupe aryl-alkyle ou alkyl-aryle en C₇₋₂₀,
ou un groupe cycloalkyle en C₅₋₁₈, lequel groupe cycloalkyle peut comporter un hétéroatome comme un atome d'oxygène, d'azote
ou de soufre ;
- Xⁿ⁻ représente un anion, comme l'ion chlorure, l'ion sulfate ou l'ion phosphate ;
- et n représente le nombre 1, 2 ou 3.

30. Procédé de production d'une composition élastomère réticulable, conforme à l'une des revendications précédentes, dans lequel ledit mélange-maître comprend au moins un agent de couplage de type silane (e).

31. Procédé de production d'une composition élastomère réticulable, conforme à la revendication 30, dans lequel ledit agent de couplage de type silane (e) au nombre d'au moins un est choisi parmi ceux qui comportent au moins un groupe silyle hydrolysable et qui peuvent être représentés par la formule générale (II) suivante :
(R)₃Si-CₙH₂ₙ-X (II)
dans laquelle
- les symboles R représentent des entités qui peuvent être identiques
ou différentes les unes des autres et qui sont choisies parmi les groupes alkyle, alcoxy et aryloxy et les atomes d'halogène, sous réserve qu'au moins l'une des entités représentées par R soit un groupe alcoxy ou aryloxy ;
- l'indice n est un nombre entier qui vaut de 1 à 6, bornes incluses ;
- et X représente une entité choisie parmi les groupes nitroso, sulfanyle, amino et vinyle, les groupes de type époxyde ou imide, un atome de chlore, et les groupes de formule -(S)ₘ-CₙH₂ₙ-Si(R)₃ ou -S-CO-R où les indices m et n sont des nombres entiers qui valent de 1 à 6, bornes incluses, et R a la signification indiquée ci-dessus.

32. Procédé de production d'une composition élastomère réticulable, conforme à la revendication 30 ou 31, dans lequel ledit agent de couplage de type silane (e) au nombre d'au moins un se trouve dans le mélange-maître en une proportion de 0 à 25 pcé.

33. Procédé de production d'une composition élastomère réticulable, conforme à la revendication 32, dans lequel ledit agent de couplage de type silane (e) au nombre d'au moins un se trouve dans le mélange-maître en une proportion de 5 à 20 pcé.

34. Procédé de production d'une composition élastomère réticulable, conforme à l'une des revendications précédentes, dans lequel ledit mélange-maître comprend des fibres discontinues (f).

35. Procédé de production d'une composition élastomère réticulable, conforme à la revendication 34, dans lequel lesdites fibres discontinues (f) sont des fibres d'aramide.

36. Procédé de production d'une composition élastomère réticulable, conforme à la revendication 35, dans lequel lesdites fibres d'aramide sont des fibres de poly(para-phénylène-téréphtalamide), courtes et portant des fibrilles.

37. Procédé de production d'une composition élastomère réticulable, conforme à la revendication 35 ou 36, dans lequel lesdites fibres d'aramide sont dispersées au préalable dans une matrice en un polymère choisi parmi les suivants : caoutchouc naturel, copolymères de butadiène et de styrène, et copolymères d'éthylène et d'acétate de vinyle.

38. Procédé de production d'une composition élastomère réticulable, conforme à la revendication 37, dans lequel ladite matrice en polymère est en caoutchouc naturel.

39. Procédé de production d'une composition élastomère réticulable, conforme à la revendication 34, dans lequel lesdites fibres discontinues (f) sont choisies parmi des fibres à base d'autres polyamides, de polyesters, de polyoléfines ou de poly(alcool vinylique), des fibres de verre, des fibres naturelles comme de la cellulose ou de la lignine, et des mélanges de telles fibres.

40. Procédé de production d'une composition élastomère réticulable, conforme à l'une des revendications 34 à 39, dans lequel lesdites fibres discontinues (f) se trouvent dans la composition élastomère réticulable en une proportion de 0 à 100 pcé.

41. Procédé de production d'une composition élastomère réticulable, conforme à la revendication 40, dans lequel lesdites fibres discontinues (f) se trouvent dans la composition élastomère réticulable en une proportion de 20 à 50 pcé.

42. Procédé de production d'une composition élastomère réticulable, conforme à l'une des revendications précédentes, dans lequel il y a, dans ladite composition élastomère réticulable, au moins une charge renforçante supplémentaire, présente en une proportion de 0 à 120 pcé.

43. Procédé de production d'une composition élastomère réticulable, conforme à la revendication 42, dans lequel ladite charge renforçante supplémentaire au nombre d'au moins une est du noir de carbone, de la silice, de l'alumine, un alumino-silicate, du carbonate de calcium, du kaolin ou un mélange de ces corps.

44. Procédé de production d'une composition élastomère réticulable, conforme à l'une des revendications précédentes, dans lequel ledit agent de vulcanisation (c) au nombre d'au moins un est choisi parmi du soufre et les molécules contenant du soufre (donneurs de soufre).

45. Procédé de production d'une composition élastomère réticulable, conforme à la revendication 44, dans lequel ledit agent de vulcanisation (c) au nombre d'au moins un se trouve dans la composition élastomère en une proportion de 0,5 à 5 pcé.

46. Procédé de production d'une composition élastomère réticulable, conforme à la revendication 45, dans lequel ledit agent de vulcanisation (c) au nombre d'au moins un se trouve dans la composition élastomère en une proportion de 1 à 3 pcé.
